(19) Europäisches Patentamt
European Patent Office
Office européen des brevets

(11) **EP 3 589 456 B1**

(12) **EUROPÄISCHE PATENTSCHRIFT**

(45) Veröffentlichungstag und Bekanntmachung des Hinweises auf die Patenterteilung:
**05.04.2023 Patentblatt 2023/14**

(21) Anmeldenummer: **18704224.7**

(22) Anmeldetag: **07.02.2018**

(51) Internationale Patentklassifikation (IPC):
**B25J 9/00** (2006.01)   **B25J 13/08** (2006.01)
**B25J 17/02** (2006.01)

(52) Gemeinsame Patentklassifikation (CPC):
**B25J 9/0057; B25J 9/0069; B25J 13/088; B25J 17/0216**

(86) Internationale Anmeldenummer:
**PCT/EP2018/053113**

(87) Internationale Veröffentlichungsnummer:
**WO 2018/158056 (07.09.2018 Gazette 2018/36)**

(54) **PARALLELKINEMATIK**

PARALLEL KINEMATIC ASSEMBLY

CINÉMATIQUE PARALLÈLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.02.2017 DE 102017104189**

(43) Veröffentlichungstag der Anmeldung:
**08.01.2020 Patentblatt 2020/02**

(73) Patentinhaber: **Technische Universität Hamburg
21073 Hamburg (DE)**

(72) Erfinder:
• **SCHULZ, Stefan
76327 Pfinztal (DE)**
• **SEIBEL, Arthur
21035 Hamburg (DE)**
• **KLOOCK-SCHREIBER, Daniel
21077 Hamburg (DE)**

• **SCHLATTMANN, Josef
48431 Rheine (DE)**

(74) Vertreter: **Koplin, Moritz
Anne-Conway-Straße 1
28359 Bremen (DE)**

(56) Entgegenhaltungen:
**JP-A- 2015 160 298     US-A1- 2016 016 309**

• **TESFAY TESFU MEKONNEN ET AL: "P1.10 - MEMS Based Position and Motion Sensors for Controlling Complex Parallel Mechanisms", SENSOR+TEST CONFERENCE 2009 - SENSOR 2009 PROCEEDINGS, Bd. II, 28. Mai 2009 (2009-05-28), Seiten 271-276, XP055465370, P.O. Box 2352, 31506 Wunstorf, Germany DOI: 10.5162/sensor09/v2/p1.10 ISBN: 978-3-9810993-5-5**

EP 3 589 456 B1

**Beschreibung**

GEBIET

Die vorliegende Erfindung bezieht sich auf eine Vorrichtung gemäß dem Oberbegriff des Anspruchs 1 Insbesondere bezieht sich die vorliegende Erfindung auf eine parallelkinematische Vorrichtung, bei der die Position und die Ausrichtung der Plattform relativ zum Gestell bestimmbar sind, ohne die jeweiligen Längen der Verbindungselemente zwischen Plattform und Gestell, welche einen translatorischen Freiheitsgrad aufweisen, messen zu müssen.

Aus der US 2016/016309 A1 ist ein Bewegungssystem mit einer Vielzahl an Stewart-Plattformbasierten Aktoren bekannt.

Aus TESFAY TESFU MEKONNEN ET AL, "P1.10 - MEMS Based Position and Motion Sensors for Controlling Complex Parallel Mechanisms", SENSOR+TEST CONFERENCE 2009 - SENSOR 2009 PROCEEDINGS, P.O. Box 2352, 31506 Wunstorf, Germany, (20090528), vol. II, doi:10.5162/sensor09/v2/p1.10, ISBN 978-3-9810993-5-5, pages 271 - 276, sind Sensorbasierte Verfahren zur Bestimmung der Pose einer Parallelkinematik bekannt.

HINTERGRUND

Parallelkinematische Vorrichtungen sind Führungsgetriebe, die mindestens zwei voneinander unabhängige Führungsketten besitzen, um eine Plattform mit einem Gestell zu verbinden. Je nach Anzahl der vorhandenen Führungsketten weisen parallelkinematische Vorrichtungen eine oder mehrere geschlossene kinematische Ketten auf, welche aus passiven, d.h. nicht angetriebenen Gliedern sowie aktiven, d.h. angetriebenen Gliedern (rotatorisch oder linear) besteht. Dabei ist zur Positionierung der Plattform bzw. zur Ermittlung der Stellungen der aktiven Glieder der Führungsketten die Kenntnis der Vorwärtskinematik bzw. der Rückwärtskinematik der entsprechenden parallelkinematischen Vorrichtung erforderlich.

Bei der Vorwärtskinematik wird die Lage der Plattform (der Begriff "Lage" bezeichnet hier und im Folgenden die räumliche Position und Ausrichtung bzw. Orientierung der Plattform relativ zum Gestell) aus den Stellungen der aktiven Glieder der Führungsketten berechnet. Allerdings umfasst die Vorwärtskinematik parallelkinematischer Vorrichtungen Zwangsbedingungen, die zu hohen Graden des Lösungspolynoms der Bewegungsgleichungen führen und damit oftmals einen hohen Berechnungsaufwand erzeugen. Darüber hinaus ergeben sich eine Vielzahl an nicht-eindeutigen Lösungen, die selektiert werden müssen. Zudem hängt die Dauer der Berechnung sowie die gefundene Lösung von der Anfangsschätzung ab. Um den Berechnungsaufwand zu reduzieren, können mit Hilfe von zusätzlichen Sensoren weitere Daten ermittelt werden, die das Lösen des Gleichungssystems vereinfachen.

Die Rückwärtskinematik, auch inverse Kinematik genannt, stellt den Zusammenhang zwischen den Stellungen der aktiven Glieder der Führungsketten und der Lage der Plattform dar. Dabei werden anhand der bekannten Lage der Plattform die Stellungen der aktiven Glieder bestimmt. Die inverse Kinematik für parallelkinematische Vorrichtungen ist aufgrund der geschlossenen kinematischen Kette eindeutig lösbar.

Ein bekanntes Beispiel für parallelkinematische Vorrichtungen sind 6-UPS- und 6-SPS-Parallelkinematiken, auch Hexapoden oder Stewart-Gough-Plattformen genannt. Ein Hexapod umfasst sechs aktive Verbindungselemente mit translatorischem Freiheitsgrad, z.B. prismatische Glieder (P), die über passive Verbindungselemente mit rotatorischen Freiheitsgraden, bspw. Kugelgelenken (S) oder Kreuzgelenken bzw. Kardangelenken (U), eine Plattform mit einem Gestell verbinden. Hinsichtlich der Vorwärtskinematik existieren für den Hexapod im allgemeinsten Fall 40 verschiedene Lösungen für eine Konstellation an Längen der aktiven Verbindungselemente, wobei die Anzahl der Lösungen durch gezielte Anordnung der passiven Verbindungselemente auf dem Gestell bzw. der Plattform reduziert werden kann. Dies wiederum kann zu Einschränkungen im Arbeitsraum und/oder in der Stabilität der Parallelkinematik führen.

Bekannte Konzepte zur Lösung der Vorwärtskinematik von Hexapoden verwenden neben den Längen der aktiven Verbindungselemente ferner oftmals Messdaten weiterer Sensoren, um eine eindeutige Lösung für eine Konstellation an Längen der aktiven Verbindungselemente ermitteln zu können. Dabei kann es unter Umständen zu Problemen bei der Kommunikation und der Datenverarbeitung der unterschiedlichen Messsysteme kommen. Je nach Größe, Aufbau und Befestigung können weitere Sensoren zudem den Arbeitsraum des Hexapods einschränken. Darüber hinaus ist die Längenbestimmung der aktiven Verbindungselemente oftmals aufwändig, da die aktiven Verbindungselemente typischerweise durch geführte oder nichtgeführte elektrische Linearantriebe wie Kugelumlaufspindeln sowie durch hydraulische oder pneumatische Kolbenstangenzylinder realisiert werden, wobei hydraulische und pneumatische Antriebe aufgrund der schlechten Positionierbarkeit und der temperaturabhängigen Viskosität seltener verwendet werden. Dabei sind geführte Linearantriebe aktive Verbindungselemente, die ausschließlich translatorische Freiheitsgrade aufweisen, wohingegen nichtgeführte Linearantriebe auch rotatorische Freiheitsgrade besitzen können.

Bei den elektrischen Antrieben erfolgt die Längenmessung des Linearantriebs entweder intern über den Antrieb oder extern, z.B. über die Längenänderung einer Spindel. Die interne Längenbestimmung erfolgt meist indirekt, da die Länge der aktiven Verbindungselemente mit den Werten eines Drehaufnehmers, der den Drehwinkel der Motorwelle detektieren kann, in Zusammenhang gesetzt wird. Dabei kann zwischen der absoluten und der relativen Messung unterschieden werden. Bei der absoluten Längenbestimmung muss ein Absolutdrehaufnehmer verwendet werden, der den gesamten Arbeitsraum des Linearantriebs abdeckt. Dies ist zum einen teuer und aufwändig und zum anderen wird dadurch der Arbeitsraum eingeschränkt.

Bei der relativen Längenmessung ist eine Referenzfahrt notwendig, bei der die aktiven Verbindungselemente bis zu einer definierten Länge ein- oder ausgefahren werden. Diese Länge wird dann mit den Drehaufnehmerwerten in Zusammenhang gesetzt. Die relative Längenbestimmung hat daher den Nachteil, dass eine Bewegung der Linearantriebe und somit des gesamten Hexapods notwendig ist. Zudem geht die exakte Länge bei jedem Neustart oder bei vom Drehaufnehmer nicht detektierten Bewegungen verloren. Interne Messungen der Länge haben ferner den Nachteil, dass unkontrollierte Bewegungen der aktiven Verbindungselemente, wie z.B. die passive Rotation, sich unter Umständen nicht detektieren lassen.

Bei einer externen, direkten Längenmessung müssen zusätzliche Sensoren eingebaut werden, die meist teuer sind und je nach Größe, Aufbau und Befestigung den Arbeitsraum des Hexapods einschränken. Für einen nichtgeführten Linearantrieb mit Kugelumlaufspindel wird die externe Längenbestimmung ferner dadurch erschwert, dass die Verdrehung der Spindel zu einer Längenveränderung führen kann, die ebenfalls vom Sensor detektiert werden muss.

ZUSAMMENFASSUNG

Es ist daher die Aufgabe der vorliegenden Erfindung, eine parallelkinematische Vorrichtung bereitzustellen, bei der die Lage der Plattform einfach und eindeutig bestimmt werden kann.

Dies wird insbesondere dadurch erreicht, dass zur Bestimmung der Lage der Plattform die jeweiligen Ausrichtungen der Verbindungselemente mit einem translatorischen Freiheitsgrad (d. h. die Orientierung der Achse bzw. der Achsen des jeweiligen Verbindungselements im dreidimensionalen Raum) verwendet werden, wodurch auf die Messung der Längen besagter Verbindungselemente verzichtet werden kann.

Die erfindungsgemäße Vorrichtung umfasst ein Gestell, eine Plattform und eine Vielzahl an ersten Verbindungselementen, welche jeweils einen translatorischen Freiheitsgrad und bis zu einen rotatorischen Freiheitsgrad aufweisen. Die ersten Verbindungselemente sind mit dem Gestell mittels zweiter Verbindungselemente mit jeweils mindestens einem rotatorischen Freiheitsgrad verbunden. Die ersten Verbindungselemente sind ferner mit der Plattform mittels dritter Verbindungselemente mit ebenfalls jeweils mindestens einem rotatorischen Freiheitsgrad verbunden. Des Weiteren umfasst die Vorrichtung eine Einrichtung, wobei zwei, drei oder mehr der ersten Verbindungselemente mit Ausrichtungsbestimmungseinheiten versehen sind und die Einrichtung eingerichtet ist, eine Position der Plattform relativ zum Gestell auf Basis von Ausrichtungsdaten der Ausrichtungsbestimmungseinheiten zu bestimmen.

Dabei ist unter dem Begriff "Gestell", wie er in der Beschreibung und den Ansprüchen verwendet wird, insbesondere ein während des Betriebs der Vorrichtung durch eine Auflage abgestütztes Bauteil der Vorrichtung zu verstehen. Ferner ist unter dem Begriff "Plattform", wie er in der Beschreibung und den Ansprüchen verwendet wird, insbesondere ein während des Betriebs der Vorrichtung mit einem Endeffektor versehenes Bauteil der Vorrichtung zu verstehen. Allerdings versteht es sich, dass die Begriffe "Gestell" und "Plattform" im Prinzip nur zwei (möglicherweise identische) Enden der Vorrichtung bezeichnen, die während des Betriebs (fortlaufend) relativ zueinander ausgerichtet werden können.

Ferner ist unter der Formulierung "Verbindungselement, welches einen translatorischen Freiheitsgrad und bis zu einen rotatorischen Freiheitsgrad aufweist", wie er in der Beschreibung und den Ansprüchen verwendet wird, insbesondere ein längenveränderlicher Aktuator wie bspw. ein aktives Schubgelenk bzw. prismatisches Gelenk zu verstehen. Des Weiteren ist unter der Formulierung "Verbindungselemente mit mindestens einem rotatorischen Freiheitsgrad", wie er in der Beschreibung und den Ansprüchen verwendet wird, insbesondere ein Kreuzgelenk bzw. Kardangelenk oder ein Kugelgelenk zu verstehen. Unter dem Begriff "Ausrichtungsbestimmungseinheit", wie er in der Beschreibung und den Ansprüchen verwendet wird, ist zudem insbesondere ein Sensor bzw. eine Kombination von Sensoren zu verstehen, der Ausrichtungsdaten liefert, die eine dreidimensionale Drehung relativ zu einem ortsfesten Koordinatensystem repräsentieren (bspw. Einträge einer Rotationsmatrix, Quaternionen, Euler- Winkel etc.).

Vorzugsweise ist die Plattform mit einer Ausrichtungsbestimmungseinheit versehen und die Einrichtung ferner eingerichtet, eine Ausrichtung der Plattform relativ zum Gestell unter Verwendung von Ausrichtungsdaten der Ausrichtungsbestimmungseinheit zu bestimmen.

Dadurch kann die Anzahl der mit Ausrichtungsbestimmungseinheiten versehenen ersten Verbindungselemente auf zwei reduziert werden, da sich die Position nicht-paralleler erster Verbindungselemente aus den Ausrichtungsdaten eindeutig bestimmen lässt und die Ausrichtung der Plattform bzw. des Gestells durch die jeweiligen Geraden durch die Enden der ersten Verbindungselemente (Rotationszentren der zweiten und dritten Verbindungselemente) festgelegt ist, so dass eine weitere Relativkoordinate hinsichtlich der Ausrichtung der Plattform relativ zum Gestell eine eindeutige Bestimmung der Relativlage zwischen Plattform und Gestell ermöglicht.

Vorzugsweise umfassen die Ausrichtungsbestimmungseinheiten Beschleunigungs- und/oder Drehratensensoren.

Dadurch kann eine vollständige Bestimmung der Ausrichtung der ersten Verbindungselemente bzw. der Plattform zum Erdmagnetfeld erfolgen, bspw. durch Ermittlung der Nick- und Rollwinkel auf Basis der Beschleunigungssensoren und des Gierwinkels auf Basis eines oder mehrerer Drehratensensoren.

Vorzugsweise ist die Einrichtung ferner eingerichtet, die Position und Ausrichtung der Plattform relativ zum Gestell durch aktives Verändern einer Länge eines oder mehrerer der ersten Verbindungselemente und/oder einer Ausrichtung eines oder mehrerer der zweiten und/oder dritten Verbindungselemente zu steuern.

Die Einrichtung kann bspw. eine Steuereinrichtung sein, die eine aktuelle Position und Ausrichtung der Plattform relativ zum Gestell bestimmt und aus einem Vergleich mit einer Soll-Position und -Ausrichtung der Plattform relativ zum Gestell Steuerdaten berechnet. Auf Basis der Steuerdaten können dann die Länge eines oder mehrerer der ersten Verbindungselemente und/oder die Ausrichtung eines oder mehrerer der zweiten und/oder dritten Verbindungselemente verändert werden.

Vorzugsweise ist die Vorrichtung als Hexapod ausgebildet.

Die Einrichtung zum Bestimmen der Position der Plattform relativ zum Gestell ist eingerichtet, zwei nicht-parallele Richtungsvektoren zu bestimmen, die die jeweilige Ausrichtung von ersten Verbindungselementen beschreiben, von den zwei Richtungsvektoren jeweils eine erste und eine zweite Gerade parallel zu dem jeweiligen Richtungsvektor abzuleiten, wobei die ersten Geraden durch erste Stützpunkte und die zweiten Geraden durch zweite Stützpunkte verlaufen, wobei eine Relativposition der ersten Stützpunkte mit einer Relativposition der Rotationszentren der entsprechenden zweiten Verbindungselemente übereinstimmt, und eine Relativposition der zweiten Stützpunkte mit einer Relativposition der Rotationszentren der entsprechenden dritten Verbindungselemente übereinstimmt, und durch eine Verschiebung der ersten Stützpunkte relativ zu den zweiten Stützpunkten die Abstände zwischen den paarweise parallelen ersten und zweiten Geraden unter Beachtung der Relativposition der ersten Stützvektoren und unter Beachtung der Relativposition der zweiten Stützvektoren zu minimieren oder unter einen Grenzwert zu reduzieren.

Vorzugsweise ist die Einrichtung zum Bestimmen der Position der Plattform relativ zum Gestell gemäß der ersten bevorzugten Ausführungsform ferner eingerichtet, eine Ausrichtung der Plattform relativ zum Gestell durch Minimierung der Abstände von weiteren paarweise parallelen ersten und zweiten Geraden, die aus mindestens einem zusätzlichen nicht-parallelen Richtungsvektor abgeleitet sind, zu bestimmen.

KURZBESCHREIBUNG DER ZEICHNUNGEN

Die Erfindung wird nachfolgend in der detaillierten Beschreibung anhand von Ausführungsbeispielen erläutert, wobei auf Zeichnungen Bezug genommen wird, in denen:

Fig. 1 eine schematische Schnittansicht einer beispielhaften Ausgestaltung einer erfindungsgemäßen Vorrichtung;

Fig. 2 eine schematische dreidimensionale Ansicht von Geraden durch Rotationszentren der passiven Gelenke eines Hexapods als beispielhafte Ausgestaltung einer erfindungsgemäßen Vorrichtung;

Fig. 3 eine schematische zweidimensionale Ansicht von Geraden durch vier Rotationszentren der passiven Gelenke eines Hexapods zur Illustration der Bestimmung der Position der Plattform relativ zum Gestell gemäß der ersten bevorzugten Ausführungsform;

Fig. 4 eine schematische zweidimensionale Ansicht von Geraden durch vier Rotationszentren der passiven Gelenke eines Hexapods zur Illustration der Bestimmung der Position der Plattform relativ zum Gestell gemäß der zweiten bevorzugten Ausführungsform; und

Fig. 5 ein Flussdiagramm zur in Fig. 3 und 4 illustrierten Bestimmung der Position der Plattform relativ zum Gestell zeigt.

Dabei sind in den Zeichnungen gleiche oder analoge Elemente durch gleiche Bezugszeichen gekennzeichnet.

DETAILLIERTE BESCHREIBUNG

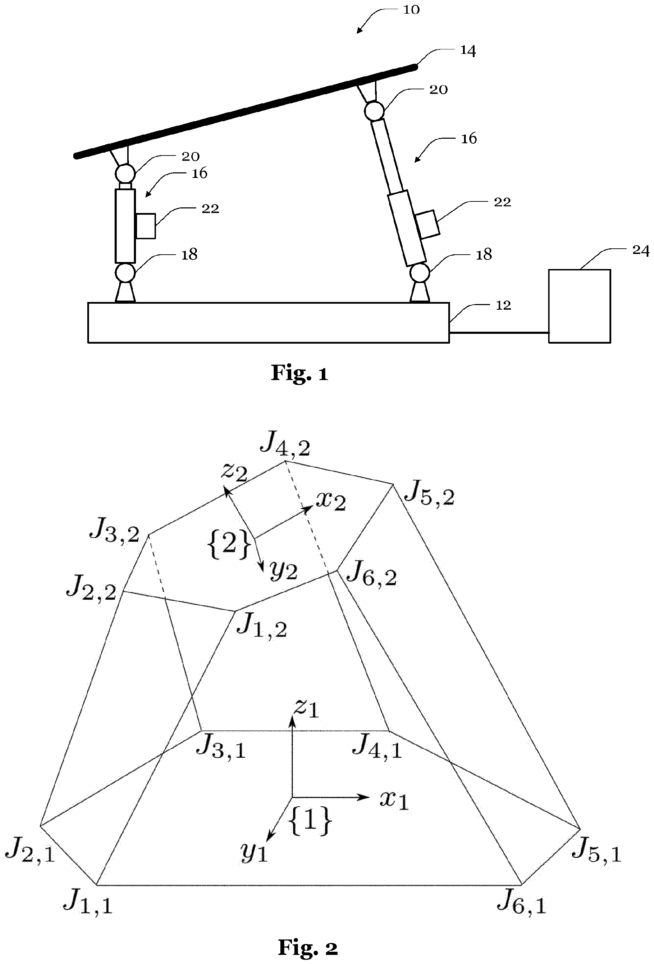

Fig. 1 zeigt Vorrichtung 10 umfassend ein Gestell 12, eine Plattform 14 und erste Verbindungselemente 16. Die ersten Verbindungselemente 16 weisen jeweils ein gestellseitiges Ende auf, das, um ein gestellfestes Rotationszentrum eines zweiten Verbindungselements 18 drehbar, mit dem Gestell 12 gelenkig verbunden ist. Die zweiten Verbindungselemente 18 können bspw. als Kugelgelenke oder Kreuzgelenke bzw. Kardangelenke ausgebildet sein und einen teilkugelschalenförmigen Bewegungsraum der gestellseitigen Enden der ersten Verbindungselemente 16 relativ zum Gestell 12 ermöglichen.

Die ersten Verbindungselemente 16 weisen ferner jeweils ein plattformseitiges Ende auf, das, um ein plattformfestes Rotationszentrum eines dritten Verbindungselements 20 drehbar, mit der Plattform 14 gelenkig verbunden ist. Die dritten Verbindungselemente 20 können ebenfalls als Kugelgelenke oder Kreuzgelenke bzw. Kardangelenke ausgebildet sein und einen teilkugelschalenförmigen Bewegungsraum der plattformseitigen Enden der ersten Verbindungselemente 16 relativ zur Plattform 14 ermöglichen.

Wie in Fig. 1 angedeutet, sind die plattformseitigen Enden der ersten Verbindungselemente 16 relativ zum jeweiligen gestellseitigen Ende der ersten Verbindungselemente 16 linear beweglich gelagert. Mindestens zwei der ersten Verbindungselemente 16 sind ferner mit einer Ausrichtungsbestimmungseinheit 22 versehen, welche Ausrichtungsdaten hinsichtlich einer Ausrichtung des jeweiligen Verbindungselements 16 bereitstellt. Dazu kann die Ausrichtungsbestimmungseinheit 22 bspw. mit Beschleunigungssensoren und/oder Drehratensensoren und optional mit Magnetsensoren versehen sein.

Zudem umfasst die Vorrichtung 10 des Weiteren eine Einrichtung 24, die eingerichtet ist, eine Position der Plattform 14 relativ zum Gestell 12 auf Basis der Ausrichtungsdaten der Ausrichtungsbestimmungseinheiten 22 zu bestimmen. Die Ausrichtungsdaten können dabei über drahtgebundene (wie in Fig. 1 gezeigt) oder über drahtlose Kommunikationsstrecken an die Einrichtung 24 übertragen werden. Ferner kann die Einrichtung 24 dazu eingerichtet sein, Aktuatoren aktiver Verbindungselemente zu steuern. Bspw. kann die Vorrichtung 10 als Hexapod ausgebildet sein, bei dem die jeweilige Länge der ersten Verbindungselemente 16 aktiv gesteuert wird.

Fig. 2 zeigt dazu eine schematische dreidimensionale Ansicht von Geraden durch Rotationszentren der zweiten Verbindungselemente 18 und dritten Verbindungselemente 20 eines Hexapods als beispielhafte Ausgestaltung der Vorrichtung 10. Dabei ist die Lage des Gestells 12 relativ zur Plattform 14 durch die jeweiligen Koordinatensysteme {1} bzw. {2} mit den jeweiligen Basisvektoren {$x_1$, $y_1$, $z_1$} bzw. {$x_2$, $y_2$, $z_2$} gegeben, die in fester Beziehung zu den gestellfesten Rotationszentren der zweiten Verbindungselemente 18 $J_{k,1}$, wobei $k = 1 \dots 6$, bzw. in fester Beziehung zu den plattformfesten Rotationszentren der dritten Verbindungselemente 20 $J_{k,2}$ stehen.

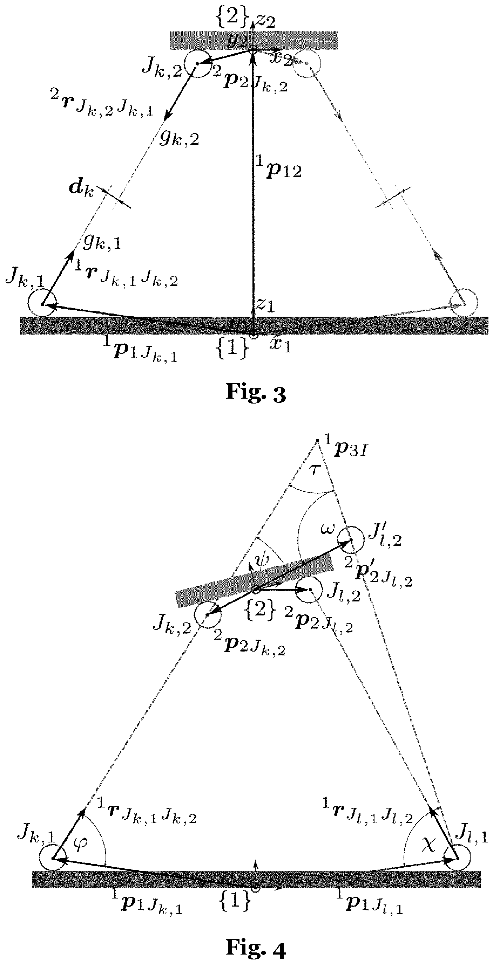

Wie in Fig. 3 gezeigt, können aus den Ausrichtungsdaten zweier erster Verbindungselemente 16 zwei nichtparallele Richtungsvektoren bestimmt werden, die die jeweilige Ausrichtung der ersten Verbindungselemente 16 beschreiben. Zu jedem der bestimmten Richtungsvektoren kann ein erster Stützpunkt $J_{k,1}$ und ein zweiter Stützpunkt $J_{k,2}$ ermittelt werden, wobei der erste Stützpunkt und der Richtungsvektor eine erste Gerade $g_{k,1}$ und der zweite Stützpunkt und der Richtungsvektor eine zweite Gerade $g_{k,2}$ definieren.

Durch eine Verschiebung der ersten Stützpunkte relativ zu den zweiten Stützpunkten, durch welche Abstände zwischen den paarweise parallelen ersten und zweiten Geraden $g_{k,1}$ und $g_{k,2}$ minimiert oder unter einen Grenzwert reduziert werden, kann die Position der Plattform 14 relativ zum Gestell 12 im Rahmen einer (unter Umständen iterativen) Lösung eines Optimierungsproblems ermittelt werden. Die Ausrichtung der Plattform 14 relativ zum Gestell 12 kann dabei entweder (durch Vorsehen einer Ausrichtungsbestimmungseinheit 22) direkt gemessen oder durch Einbeziehen eines oder mehrerer weiterer nicht-paralleler Richtungsvektoren bestimmt werden.

Numerische Lösung

Die Position des Rotationszentrums des kten zweiten Verbindungselements 18 relativ zum Gestell 12 sei durch $^1\boldsymbol{p}_{1J_{k,1}}$ und die Position des Rotationszentrums des Arten dritten Verbindungselements 20 (wobei die kten Verbindungselemente 18 und 20 durch ein erstes Verbindungselement 16 verbunden sind) relativ zum Gestell 12 sei durch $^1\boldsymbol{p}_{12} + {}^1\boldsymbol{R}_2 \cdot {}^2\boldsymbol{p}_{2J_{k,2}}$ gegeben, wobei $^1\boldsymbol{p}_{12}$ und $^1\boldsymbol{R}_2$ die Position und Ausrichtung der Plattform 14 beschreiben und $^2\boldsymbol{p}_{2J_{k,2}}$ die Position des Rotationszentrums des kten dritten Verbindungselements 20 relativ zur Plattform 14 sei.

Mit Hilfe der Ausrichtungsbestimmungseinheiten 22, die bspw. an den ersten Verbindungselementen 16 befestigt sein können, lassen sich die Richtungsvektoren $\boldsymbol{r}_{J_{k,1}J_{k,2}}$ bzw. $\boldsymbol{r}_{J_{k,2}J_{k,1}}$ bestimmen, die jeweils in entgegengesetzte Richtung zeigen. Da die zweiten Verbindungselemente 18 und die dritten Verbindungselemente 20 über die ersten Verbindungselemente 16 miteinander verbunden sind, ist die Orientierung der ersten Verbindungselemente 16 ebenfalls durch $\dfrac{\boldsymbol{p}_{J_{k,1}J_{k,2}}}{|\boldsymbol{p}_{J_{k,1}J_{k,2}}|}$ bzw. $\dfrac{\boldsymbol{p}_{J_{k,2}J_{k,1}}}{|\boldsymbol{p}_{J_{k,2}J_{k,1}}|}$ gegeben.

Da die Richtungsvektoren immer genau in entgegengesetzte Richtungen zeigen, stehen die oben genannten Geraden immer parallel zueinander. Der Abstand zwischen den Geraden $g_{k,1}$ und $g_{k,2}$ kann demnach wie folgt analytisch berechnet werden:

$$d_k = \frac{r_{J_{k,1}J_{k,2}} \times \left( {}^1p_{1\,2} + {}^1R_2 \cdot {}^2p_{2\,J_{k,2}} - {}^1p_{1\,J_{k,1}} \right)}{|r_{J_{k,1}J_{k,2}}|}.$$

Daraus ergibt sich das allgemeine Optimierungsproblem

$$d_k = \min!,$$

aus dem sowohl die Position als auch die Ausrichtung der Plattform bestimmt werden kann.

Bei bekannter Ausrichtung der Plattform ${}^1R_2$ kann der Abstand zwischen den Geraden als Kriterium in einem Algorithmus verwendet werden, der die angenommene Position der Plattform ${}^1p_{1\,2}$ solange verändert bis ein Minimum erreicht wird. Zudem kann ein lineares Ausgleichsproblem formuliert werden, mit dem ein garantiertes Minimum gefunden werden kann.

Die Ausrichtung der Plattform 14 relativ zum Gestell 12 kann dabei entweder (durch Vorsehen einer Ausrichtungsbestimmungseinheit 22) direkt gemessen oder durch Einbeziehen eines oder mehrerer weiterer nicht-paralleler Richtungsvektoren bestimmt werden.

Analytische Lösung

Wie in Fig. 4 gezeigt, kann das Problem des Bestimmens der Position der Plattform 14 relativ zum Gestell 12 auch analytisch gelöst werden. Betrachtet man bspw. zwei erste Verbindungselemente 16 mit den Rotationszentren ${}^1p_{1\,J_{k,1}}$ und ${}^1p_{1\,J_{l,1}}$ relativ zum Gestell 12 sowie den Rotationszentren ${}^2p_{2\,J_{k,2}}$ und ${}^2p_{2\,J_{l,2}}$ relativ zur Plattform 14, bilden diese vier Rotationszentren ein gewöhnliches Viereck im Raum. Betrachtet man die beiden Rotationszentren relativ zum Gestell 12 und ein Rotationszentrum relativ zur Plattform 14, lässt sich damit eine Ebene im Raum aufspannen. Das vierte Rotationszentrum ${}^2p_{2\,J_{l,2}}$ liegt dann entweder auf dieser Ebene oder kann, wie in Fig. 4 gezeigt, durch eine virtuelle Verdrehung des Richtungsvektors ${}^1r_{J_{l,1}J_{l,2}}$ auf die Ebene abgebildet werden, so dass sich die Geraden durch die Rotationszentren in dem Punkt ${}^1p_{3l}$ schneiden.

Da die Abstände der Rotationszentren relativ zum Gestell bzw. der Plattform bekannt sind, kann dieser Schnittpunkt berechnet werden. Anschließend lassen sich die zu bestimmenden Längen der Strecken zwischen den Rotationszentren errechnen. Mit Hilfe der Längen der Strecken und deren Orientierung kann dann die Position und Orientierung der Plattform 14 eindeutig bestimmt werden. Die Ausrichtung der Plattform 14 relativ zum Gestell 12 kann dabei wiederum entweder (durch Vorsehen einer Ausrichtungsbestimmungseinheit 22) direkt gemessen oder durch Einbeziehen eines oder mehrerer weiterer nicht-paralleler Richtungsvektoren bestimmt werden.

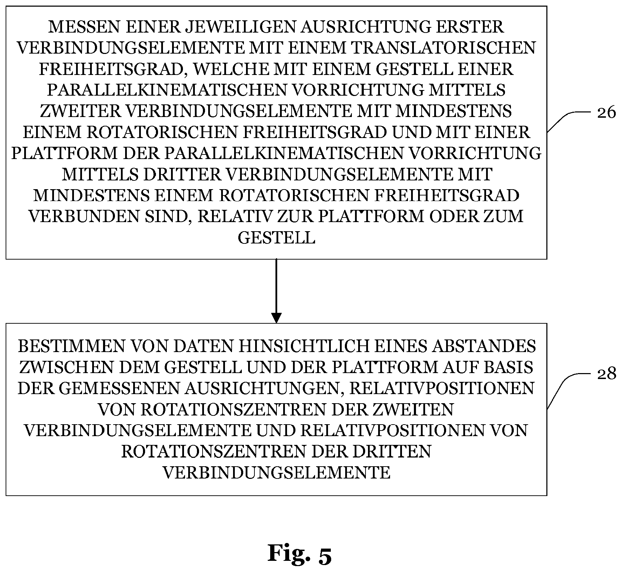

Fig. 5 zeigt ein Flussdiagramm der Schritte, die den in Fig. 3 und 4 illustrierten Vorgehensweisen zur Bestimmung der Position der Plattform 14 relativ zum Gestell 12 gemein sind.

BEZUGSZEICHENLISTE

| | |
|---|---|
| 10 | Vorrichtung |
| 12 | Gestell |
| 14 | Plattform |
| 16 | erstes Verbindungselement |
| 18 | zweites Verbindungselement |
| 20 | drittes Verbindungselement |
| 22 | Ausrichtungsbestimmungseinheit |
| 24 | Einrichtung |
| 26, 28 | Prozessschritte |

**Patentansprüche**

1. Vorrichtung (10), umfassend:

   ein Gestell (12);
   eine Plattform (14);
   eine Vielzahl an ersten Verbindungselementen (16), welche einen translatorischen Freiheitsgrad und bis zu einem rotatorischen Freiheitsgrad aufweisen, wobei die ersten Verbindungselemente (16) mit dem Gestell (12) mittels zweiter Verbindungselemente (18) mit mindestens einem rotatorischen Freiheitsgrad, und mit der Plattform (14) mittels dritter Verbindungselemente (20) mit mindestens einem rotatorischen Freiheitsgrad verbunden sind; und
   eine Einrichtung (24);
   wobei zwei, drei oder mehr der ersten Verbindungselemente (16) mit Ausrichtungsbestimmungseinheiten (22) versehen sind;
   **dadurch gekennzeichnet, dass**
   die Einrichtung (24) eingerichtet ist, eine Position der Plattform (14) relativ zum Gestell (12) auf Basis von Ausrichtungsdaten der Ausrichtungsbestimmungseinheiten (22) zu bestimmen; und
   die Einrichtung (24) zum Bestimmen der Position der Plattform (14) relativ zum Gestell (12) eingerichtet ist:

   zwei nicht-parallele Richtungsvektoren zu bestimmen, die die jeweilige Ausrichtung von ersten Verbindungselementen (16) beschreiben; von den zwei Richtungsvektoren jeweils eine erste und eine zweite Gerade parallel zu dem jeweiligen Richtungsvektor abzuleiten, wobei die ersten Geraden durch erste Stützpunkte und die zweiten Geraden durch zweite Stützpunkte verlaufen, wobei eine Relativposition der ersten Stützpunkte mit einer Relativposition der Rotationszentren der entsprechenden zweiten Verbindungselemente (18) übereinstimmt, und eine Relativposition der zweiten Stützpunkte mit einer Relativposition der Rotationszentren der entsprechenden dritten Verbindungselemente (20) übereinstimmt; und
   durch eine Verschiebung der ersten Stützpunkte relativ zu den zweiten Stützpunkten die Abstände zwischen den paarweise parallelen ersten und zweiten Geraden unter Beachtung der Relativposition der ersten Stützvektoren und unter Beachtung der Relativposition der zweiten Stützvektoren zu minimieren oder unter einen Grenzwert zu reduzieren.

2. Vorrichtung (10) nach Anspruch 1, wobei die Plattform (14) mit einer Ausrichtungsbestimmungseinheit (22) versehen ist und die Einrichtung (24) ferner eingerichtet ist, eine Ausrichtung der Plattform (14) relativ zum Gestell (12) unter Verwendung von Ausrichtungsdaten der Ausrichtungsbestimmungseinheit (22) zu bestimmen.

3. Vorrichtung (10) nach Anspruch 1 oder 2, wobei die Ausrichtungsbestimmungseinheiten (22) Beschleunigungs- und/oder Drehratensensoren umfassen.

4. Vorrichtung (10) nach einem der Ansprüche 1 bis 3, wobei die Einrichtung (24) ferner eingerichtet ist, die Position und die Ausrichtung der Plattform (14) relativ zum Gestell (12) durch aktives Verändern einer Länge eines oder mehrerer der ersten Verbindungselemente (16) und/oder einer Ausrichtung eines oder mehrerer der zweiten und/oder dritten Verbindungselemente (18, 20) zu steuern.

5. Vorrichtung (10) nach einem der Ansprüche 1 bis 4, wobei die Vorrichtung (10) als Hexapod ausgebildet ist.

6. Vorrichtung (10) nach einem der Ansprüche 1 bis 5, wobei die Einrichtung (24) zum Bestimmen der Position der Plattform (14) relativ zum Gestell (12) ferner eingerichtet ist, eine Ausrichtung der Plattform (14) relativ zum Gestell (12) durch Minimierung der Abstände von weiteren paarweise parallelen ersten und zweiten Geraden, die aus mindestens einem zusätzlichen nicht-parallelen Richtungsvektor abgeleitet sind, zu bestimmen.

**Claims**

1. Apparatus (10) comprising:

   a frame (12);
   a platform (14);
   a plurality of first connection elements (16) which have one translational degree of freedom and up to one rotational degree of freedom, wherein the first connection elements (16) are connected to the frame (12) by means of second connection elements (18) having at least one rotational degree of freedom, and are connected to the platform (14) by means of third connection elements (20) having at least one rotational degree of freedom; and

a device (24);

wherein two, three or more of the first connection elements (16) are provided with orientation determination units (22);

**characterised in that**

the device (24) is configured to determine a position of the platform (14) relative to the frame (12) on the basis of orientation data from the orientation determination units (22); and

the device (24) for determining the position of the platform (14) relative to the frame (12) is configured:

to determine two non-parallel direction vectors which describe the respective orientation of first connection elements (16); to derive from the two direction vectors, respectively, a first and a second straight line parallel to the respective direction vector, wherein the first straight lines extend through first support points and the second straight lines extend through second support points, wherein a relative position of the first support points coincides with a relative position of the centres of rotation of the corresponding second connection elements (18), and a relative position of the second support points coincides with a relative position of the centres of rotation of the corresponding third connection elements (20); and

to minimise or reduce below a limit value the distances between the first and second straight lines which are parallel in pairs, taking into account the relative position of the first support vectors and taking into account the relative position of the second support vectors, by shifting the first support points relative to the second support points.

2. Apparatus (10) according to claim 1, wherein the platform (14) is provided with an orientation determination unit (22) and the device (24) is further configured to determine an orientation of the platform (14) relative to the frame (12) using orientation data from the orientation determination unit (22).

3. Apparatus (10) according to claim 1 or 2, wherein the orientation determination units (22) comprise acceleration and/or yaw rate sensors.

4. Apparatus (10) according to any of claims 1 to 3, wherein the device (24) is further configured to control the position and orientation of the platform (14) relative to the frame (12) by actively varying a length of one or more of the first connection elements (16) and/or an orientation of one or more of the second and/or third connection elements (18, 20).

5. Apparatus (10) according to any of claims 1 to 4, wherein the apparatus (10) is in the form of a hexapod.

6. Apparatus (10) according to any of claims 1 to 5, wherein the device (24) for determining the position of the platform (14) relative to the frame (12) is further configured to determine an orientation of the platform (14) relative to the frame (12) by minimising the distances between further first and second straight lines which are parallel in pairs and which are derived from at least one additional non-parallel direction vector.

**Revendications**

1. Dispositif (10), comprenant :

un cadre (12) ;

une plateforme (14) ;

une pluralité de premiers éléments de liaison (16) lesquels présentent un degré de liberté en translation et jusqu'à un degré de liberté en rotation, dans lequel les premiers éléments de liaison (16) sont reliés au cadre (12) au moyen de deuxièmes éléments de liaison (18) avec au moins un degré de liberté en rotation, et à la plateforme (14) au moyen de troisièmes éléments de liaison (20) avec au moins un degré de liberté en rotation ; et

un appareil (24) ;

dans lequel deux, trois ou plus desdits premiers éléments de liaison (16) sont pourvus d'unités de détermination d'alignement (22) ;

**caractérisé en ce que**

l'appareil (24) est conçu pour déterminer une position de la plateforme (14) par rapport au cadre (12) sur la base de données d'alignement des unités de détermination d'alignement (22) ; et
l'appareil (24) est conçu pour déterminer la position de la plateforme (14) par rapport au cadre (12) :

déterminer deux vecteurs de direction non parallèles qui décrivent l'orientation respective de premiers éléments de liaison (16) ; déduire des deux vecteurs d'orientation respectivement une première et une seconde droites parallèles au vecteur d'orientation respectif, dans lequel les premières droites passent par des premiers points de support et les secondes droites passent par des seconds points de support, dans lequel une position relative des premiers points de support coïncide avec une position relative des centres de rotation des deuxièmes éléments de liaison (18) correspondants, et une position relative des seconds points de support coïncide avec une position relative des centres de rotation des troisièmes éléments de liaison (20) correspondants ; et

minimiser, par un déplacement des premiers points de support par rapport aux deuxièmes points de support, les distances entre les premières et secondes droites parallèles par paires, en tenant compte de la position relative des premiers vecteurs de support et en tenant compte de la position relative des seconds vecteurs de support, ou les réduire en dessous d'une valeur limite.

2. Dispositif (10) selon la revendication 1, dans lequel la plateforme (14) est pourvue d'une unité de détermination d'orientation (22) et l'appareil (24) est en outre conçu pour déterminer une orientation de la plateforme (14) par rapport au cadre (12) en utilisant des données d'orientation de l'unité de détermination d'orientation (22).

3. Dispositif (10) selon la revendication 1 ou 2, dans lequel les unités de détermination d'orientation (22) comprennent des capteurs d'accélération et/ou de vitesse de rotation.

4. Dispositif (10) selon l'une quelconque des revendications 1 à 3, dans lequel l'appareil (24) est en outre conçu pour commander la position et l'orientation de la plateforme (14) par rapport au cadre (12) en faisant varier activement une longueur d'un ou plusieurs des premiers éléments de liaison (16) et/ou une orientation d'un ou plusieurs des deuxième et/ou troisième éléments de liaison (18, 20).

5. Dispositif (10) selon l'une des revendications 1 à 4, dans lequel le dispositif (10) est réalisé sous forme d'hexapode.

6. Dispositif (10) selon l'une quelconque des revendications 1 à 5, dans lequel l'appareil (24) pour déterminer la position de la plateforme (14) par rapport au cadre (12) est en outre conçu pour déterminer une orientation de la plateforme (14) par rapport au cadre (12) en minimisant les distances d'autres première et seconde droites parallèles par paires, dérivées d'au moins un vecteur directionnel supplémentaire non parallèle.

**Fig. 1**

**Fig. 2**

**Fig. 3**

**Fig. 4**

MESSEN EINER JEWEILIGEN AUSRICHTUNG ERSTER VERBINDUNGSELEMENTE MIT EINEM TRANSLATORISCHEN FREIHEITSGRAD, WELCHE MIT EINEM GESTELL EINER PARALLELKINEMATISCHEN VORRICHTUNG MITTELS ZWEITER VERBINDUNGSELEMENTE MIT MINDESTENS EINEM ROTATORISCHEN FREIHEITSGRAD UND MIT EINER PLATTFORM DER PARALLELKINEMATISCHEN VORRICHTUNG MITTELS DRITTER VERBINDUNGSELEMENTE MIT MINDESTENS EINEM ROTATORISCHEN FREIHEITSGRAD VERBUNDEN SIND, RELATIV ZUR PLATTFORM ODER ZUM GESTELL

26

BESTIMMEN VON DATEN HINSICHTLICH EINES ABSTANDES ZWISCHEN DEM GESTELL UND DER PLATTFORM AUF BASIS DER GEMESSENEN AUSRICHTUNGEN, RELATIVPOSITIONEN VON ROTATIONSZENTREN DER ZWEITEN VERBINDUNGSELEMENTE UND RELATIVPOSITIONEN VON ROTATIONSZENTREN DER DRITTEN VERBINDUNGSELEMENTE

28

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016016309 A1

**In der Beschreibung aufgeführte Nicht-Patentliteratur**

- **TESFAY TESFU MEKONNEN et al.** P1.10 - MEMS Based Position and Motion Sensors for Controlling Complex Parallel Mechanisms. *SENSOR+TEST CONFERENCE 2009 - SENSOR 2009 PROCEEDINGS,* 28. Mai 2009, vol. II, ISBN 978-3-9810993-5-5, 271-276